(19) Europäisches Patentamt
European Patent Office
Office européen des brevets

(11) **EP 4 020 093 B1**

(12) **FASCICULE DE BREVET EUROPEEN**

(45) Date de publication et mention
de la délivrance du brevet:
**25.03.2026 Bulletin 2026/13**

(21) Numéro de dépôt: **21217765.3**

(22) Date de dépôt: **26.12.2021**

(51) Classification Internationale des Brevets (IPC):
**G03H 1/04** *(2006.01)* **G03H 1/08** *(2006.01)*
**G03H 1/26** *(2006.01)*

(52) Classification Coopérative des Brevets (CPC):
**G03H 1/0443; G03H 1/0866; G03H 1/2645;**
G03H 2001/0447; G03H 2001/0458;
G03H 2001/0471; G03H 2223/13; G03H 2223/26

(54) **PROCÉDÉ DE FORMATION D'UNE IMAGE COMPLEXE D'UN ÉCHANTILLON**

VERFAHREN ZUR ERZEUGUNG EINES KOMPLEXEN BILDES EINER PROBE

METHOD FOR FORMING A COMPLEX IMAGE OF A SAMPLE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **28.12.2020 FR 2014180**

(43) Date de publication de la demande:
**29.06.2022 Bulletin 2022/26**

(73) Titulaires:
- **Commissariat à l'Energie Atomique et aux
Energies
Alternatives
75015 Paris (FR)**
- **Centre National de la Recherche Scientifique
75016 Paris 16 (FR)**

- **Université Grenoble Alpes
38400 Saint-Martin-d'Hères (FR)**

(72) Inventeurs:
- **ZELSMANN, Marc
38330 Biviers (FR)**
- **MARCOUX, Pierre
38054 GRENOBLE Cedex 09 (FR)**
- **PICARD, Emmanuel
38054 GRENOBLE cedex 09 (FR)**

(74) Mandataire: **INNOV-GROUP
209 Avenue Berthelot
69007 Lyon (FR)**

(56) Documents cités:
**WO-A1-2019/224474**

**Description**

## DOMAINE TECHNIQUE

Le domaine technique de l'invention est la reconstruction holographique d'une image comportant des figures de diffraction.

## ART ANTERIEUR

L'observation d'échantillons, et en particulier des échantillons biologiques, par imagerie sans lentille, connaît un développement important depuis ces dix dernières années. Cette technique permet d'observer un échantillon en le disposant entre une source de lumière et un capteur d'image, sans disposer de lentille de grossissement optique entre l'échantillon et le capteur d'image. Ainsi, le capteur d'image collecte une image de l'onde lumineuse transmise par l'échantillon.

Cette image est formée de figures d'interférence entre l'onde lumineuse émise par la source de lumière et transmise par l'échantillon, et des ondes de diffraction, résultant de la diffraction, par des objets diffractants, de l'échantillon de l'onde lumineuse émise par la source de lumière. Ces figures d'interférences sont parfois dénommées figures de diffraction, ou désignées par le terme anglais « diffraction pattern ».

L'imagerie sans lentille apparaît alors comme une alternative simple, et peu onéreuse, à un microscope classique. De plus, son champ d'observation est nettement plus important que ne peut l'être celui d'un microscope. On comprend alors que les perspectives d'application liées à cette technologie sont importantes.

D'une façon générale, l'image acquise par le capteur d'image est un hologramme, comportant des figures d'interférence. Il ne présente pas une résolution spatiale suffisante pour être exploité directement, notamment lorsqu'on souhaite obtenir une représentation précise de l'échantillon. L'hologramme est généralement traité par un algorithme de reconstruction holographique. De tels algorithmes sont bien connus dans le domaine de la reconstruction holographique. Mais les algorithmes de reconstruction holographiques peuvent induire un bruit de reconstruction dans l'image reconstruite, désigné par le terme de « twin image ». Cela est essentiellement dû au fait que l'image formée sur le capteur d'image ne comporte pas d'information relative à la phase de l'onde lumineuse atteignant ce capteur. De ce fait, la reconstruction holographique s'effectue sur la base d'une information optique incomplète, parce que basée uniquement sur l'intensité de l'onde lumineuse collectée sur le capteur d'image.

L'amélioration de la qualité de la reconstruction holographique a fait l'objet de nombreux développements, en mettant en œuvre des algorithmes fréquemment dénommés « Phase retrieval », permettant une estimation de la phase de l'onde lumineuse auquel le capteur d'image est exposé. WO 2019/224474 A1 divulgue un procédé d'obtention d'une image d'un échantillon faisant appel à un algorithme itératif.

Certains algorithmes sont basés sur l'application d'un masque sur une image reconstruite. Le masque permet de délimiter des zones de l'image reconstruite dans lesquelles on considère que l'échantillon ne comporte pas d'objets diffractants. Ces zones de l'image sont utilisées en tant que référence de phase, de façon à pouvoir estimer le déphasage induit par chaque objet diffractant. Cependant, une tel procédé suppose que la densité des objets diffractants dans l'échantillon ne soit pas trop élevée, de façon à pouvoir délimiter des zones exemptes d'objets diffractants. D'autres algorithmes de reconstruction sont basés sur des acquisition successives d'hologrammes de l'échantillon, en déplaçant le capteur d'image par rapport à l'échantillon entre les acquisitions. Mais cela suppose un déplacement précis du capteur d'image par rapport l'échantillon. Cela nuit à la simplicité du dispositif.

Les inventeurs proposent un procédé d'obtention d'une image d'un échantillon par une méthode de reconstruction holographique, en mettant en œuvre un dispositif d'observation simple, ne nécessitant pas de déplacement du capteur d'image par rapport à l'échantillon. En outre, le procédé n'est pas limité à une contrainte relative à la densité de l'échantillon.

## EXPOSE DE L'INVENTION

Un premier objet de l'invention est un procédé d'obtention d'une image d'un échantillon selon la revendication indépendante 1. Un autre objet de l'invention est un dispositif d'observation d'un échantillon selon la revendication indépendante 8. D'autres aspects de l'invention sont présentés dans les revendications dépendantes.

L'invention sera mieux comprise à la lecture de l'exposé des exemples de réalisation présentés, dans la suite de la description, en lien avec les figures listées ci-dessous.

## FIGURES

Les figures 1A et 1B représentent un premier exemple de dispositif permettant une mise en œuvre de l'invention, selon une configuration d'imagerie sans lentille.

La figure 2A représente les principales étapes d'un procédé de reconstruction holographique selon l'invention.

La figure 2B est une illustration du plan de l'échantillon, du plan de détection et du plan de reconstruction évoqués en lien avec les étapes du procédé de reconstruction holographique.

La figure 3A représente un hologramme d'une mire, acquis selon une configuration d'imagerie sans lentille.

Les figures 3B et 3C sont des images de la mire, obtenues en appliquant des reconstructions numériques respectivement selon deux procédés de l'art antérieur.

La figure 3D est une image de la mire obtenue en mettant en œuvre l'invention.

La figure 4 représente un deuxième exemple de dispositif permettant une mise en œuvre de l'invention, selon une configuration d'imagerie défocalisée.

## EXPOSE DE MODES DE REALISATION PARTICULIERS

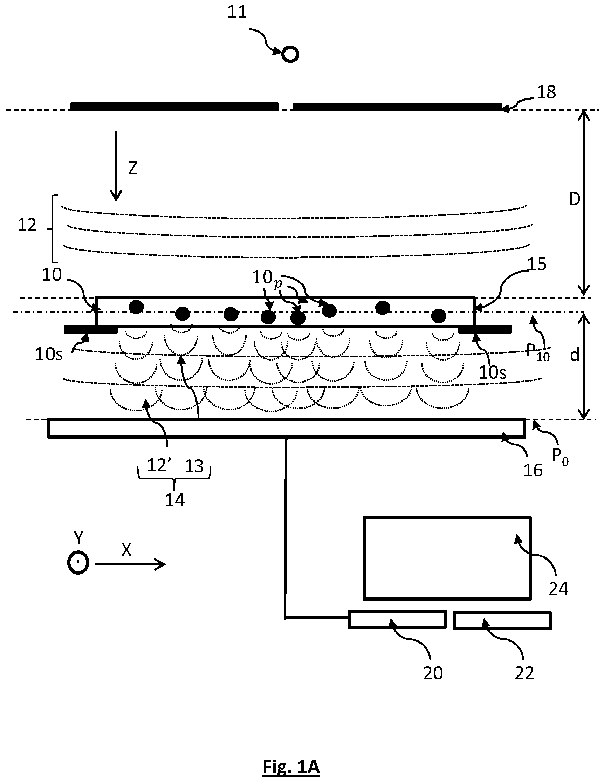

La figure 1A représente un exemple de dispositif selon l'invention. Une source de lumière 11 est configurée pour émettre une onde lumineuse 12, dite onde lumineuse incidente, se propageant en direction d'un échantillon 10, selon un axe de propagation Z. L'onde lumineuse est émise selon une bande spectrale $\Delta\lambda$, comportant une longueur d'onde $\lambda$. Cette longueur d'onde peut être une longueur d'onde centrale de ladite bande spectrale.

L'échantillon 10 est un échantillon que l'on souhaite caractériser. Il peut contenir des éléments diffractants, par exemple des particules 10p. Les particules 10p peuvent être des particules sanguines, par exemple des globules rouges. Il peut également s'agir de cellules, de microorganismes, par exemple des bactéries ou des levures, des microalgues, des microbilles, ou des gouttelettes insolubles dans le milieu liquide, par exemple des nanoparticules lipidiques. De préférence, les particules 10p ont un diamètre, ou sont inscrites dans un diamètre, inférieur à 1 mm, et de préférence inférieur à 100 $\mu$m. Il s'agit de microparticules (diamètre inférieur à 1 mm) ou de nanoparticules (diamètre inférieur à 1 $\mu$m). Le milieu, dans lequel baignent les particules, peut être un milieu liquide, par exemple une phase liquide d'un liquide corporel, d'un milieu de culture ou d'un liquide prélevé dans l'environnement ou dans un procédé industriel. Il peut également s'agir d'un milieu solide ou ayant la consistance d'un gel, par exemple un substrat de type gélose, propice à la croissance de colonies bactériennes.

L'échantillon peut également être un échantillon solide, par exemple une fine lame de tissu biologique, de type lame d'anatomopathologie, ou un extrait sec d'un fluide, par exemple d'un fluide biologique. Dans ce cas, les éléments diffractants de l'échantillon sont des structures particulières de ce dernier.

L'échantillon est de préférence transparent ou suffisamment translucide pour pouvoir permettre la formation d'une image par le capteur d'image.

L'échantillon s'étend selon un plan $P_{10}$, dit plan de l'échantillon, perpendiculaire à l'axe de propagation Z. Il est maintenu sur un support 10s. Le plan de l'échantillon est repéré par deux axes orthogonaux X et Y, définissant respectivement des coordonnées x et y.

La distance D entre la source de lumière 11 et l'échantillon 10 est de préférence supérieure à 1 cm. Elle est de préférence comprise entre 2 et 30 cm. De préférence, la source de lumière, vue par l'échantillon, est considérée comme ponctuelle. Cela signifie que son diamètre (ou sa diagonale) est préférentiellement inférieur au dixième, mieux au centième de la distance entre l'échantillon et la source de lumière. Ainsi, de préférence, la lumière parvient à l'échantillon sous la forme d'ondes planes, ou pouvant être considérées comme telles.

La source de lumière 11 peut être une diode électroluminescente ou une diode laser. Elle peut être associée à un diaphragme 18, ou filtre spatial. L'ouverture du diaphragme est typiquement comprise entre 5 $\mu$m et 1 mm, de préférence entre 50 $\mu$m et 500 $\mu$m. Le diaphragme peut être remplacé par une fibre optique, dont une première extrémité est placée face à la source de lumière 11 et dont une deuxième extrémité est placée face à l'échantillon 10.

De préférence, la bande spectrale d'émission $\Delta\lambda$ de l'onde lumineuse incidente 12 a une largeur inférieure à 100 nm, et de préférence inférieure à 20 nm ou 10 nm. Par largeur de bande spectrale, on entend une largeur à mi-hauteur de ladite bande spectrale.

L'échantillon 10 est disposé entre la source de lumière 11 et un capteur d'image 16. Ce dernier s'étend de préférence parallèlement, ou sensiblement parallèlement au plan selon lequel s'étend l'échantillon. Le terme sensiblement parallèlement signifie que les deux éléments peuvent ne pas être rigoureusement parallèles, une tolérance angulaire de quelques degrés, inférieure à 20° ou 10° étant admise.

Le capteur d'image 16 est apte à former une image selon un plan de détection $P_0$. Dans l'exemple représenté, il s'agit d'un capteur d'image comportant une matrice de pixels, de type CCD ou CMOS. Les CMOS sont les capteurs préférés car la taille des pixels est plus faible, ce qui permet d'acquérir des images dont la résolution spatiale est plus favorable. Le plan de détection $P_0$ s'étend de préférence perpendiculairement à l'axe de propagation Z de l'onde lumineuse incidente 12. Ainsi, le plan de détection $P_0$ est parallèle au plan de l'échantillon $P_{10}$. Le capteur d'image comporte des pixels, à chaque pixel étant associé des coordonnées (x, y).

La distance d entre le plan de l'échantillon $P_{10}$ et la matrice de pixels du capteur d'image 16 est préférentiellement comprise entre 50 $\mu$m et 2 cm, de préférence comprise entre 100 $\mu$m et 2 mm.

Sur le dispositif représenté sur la figure 1A, on remarque l'absence d'optique de grossissement ou de formation d'image entre le capteur d'image 16 et l'échantillon 10. Cela n'empêche pas la présence éventuelle de microlentilles de focalisation au niveau de chaque pixel du capteur d'image 16, ces dernières n'ayant pas de fonction de grandissement de l'image acquise par le capteur d'image. Un des intérêts de la configuration sans lentille, représentée sur la figure 1A, est le large champ observé, permettant d'adresser simultanément un volume d'échantillon élevé. Cela permet d'observer simultanément plusieurs particules, et ainsi d'obtenir une caractérisation rapide de l'échantillon. Le champ observé dépend de la taille du capteur d'image, en étant légèrement inférieur à la surface de détection de ce dernier, du fait de l'espacement entre les pixels du capteur et l'échantillon. Le champ observé est généralement supérieur à 10 mm$^2$, et est typiquement compris entre 10 mm$^2$ et 1000 mm$^2$, ce qui est significativement plus élevé qu'avec un microscope. La taille du capteur d'image peut être par exemple de 22 mm x 15 mm ou de 24 mm x 36 mm.

Sous l'effet de l'onde lumineuse incidente 12, les particules 10p présentes dans l'échantillon peuvent engendrer une onde diffractée 13, susceptible de produire, au niveau du plan de détection $P_0$, des interférences, en particulier avec une partie 12' de l'onde lumineuse incidente 12 transmise par l'échantillon. Par ailleurs, l'échantillon peut absorber une partie de l'onde lumineuse incidente 12. Ainsi, l'onde lumineuse 14, transmise par l'échantillon, et à laquelle est exposé le capteur d'image 16, désignée par le terme "onde lumineuse d'exposition", comprend:

- une composante 13 résultant de la diffraction de l'onde lumineuse incidente 12 par chaque particule de l'échantillon ;
- une composante 12' résultant de la transmission de l'onde lumineuse incidente 12 par l'échantillon, une partie de cette dernière pouvant être absorbée dans l'échantillon.

Ces composantes forment des interférences dans le plan de détection. Aussi, chaque image acquise par le capteur d'image comporte des figures d'interférences (ou figures de diffraction).

Une unité de traitement 20, par exemple un microprocesseur, est apte à traiter chaque image $I_{P0}$ acquise par le capteur d'image 16. En particulier, l'unité de traitement 20 comporte un microprocesseur relié à une mémoire programmable 22 dans laquelle est stockée une séquence d'instructions pour effectuer les opérations de traitement d'images et de calculs décrites dans cette description. Le processeur peut être couplé à un écran 24 permettant l'affichage d'images acquises par le capteur d'image 16 ou calculées par le processeur 20.

L'image $I_{P0}$ acquise par le capteur d'image forme un hologramme. Elle ne permet généralement pas une représentation visuelle satisfaisante de l'échantillon, en particulier lorsque l'échantillon comporte des éléments diffractants rapprochés les uns des autres. C'est notamment le cas lorsque l'échantillon comporte des particules rapprochées les unes des autres, ou lorsque l'échantillon est une fine lame de tissu biologique.

L'image $I_{P0}$ acquise par le capteur d'image 16, également appelée hologramme, peut faire l'objet d'une reconstruction, dite reconstruction holographique. De façon connue dans le domaine de l'imagerie holographique, on peut appliquer, à l'image acquise par le capteur d'image, un opérateur de propagation holographique h, de façon à calculer une expression complexe $A(x, y, z)$ représentative de l'onde lumineuse d'exposition 14, et cela en tout point de coordonnées $(x, y, z)$ de l'espace, et plus particulièrement entre le capteur d'image et l'échantillon. Les coordonnées $(x, y)$ désignent des coordonnées parallèlement au plan de détection $P_0$.

L'expression complexe $A(x, y, z)$ de l'onde lumineuse d'exposition 14, en tout point de coordonnées $(x, y, z)$ de l'espace, est telle que :

$$A(x, y, z) = M(x, y, z)e^{i\varphi(x,y,z)} \quad (1)$$

où $M(x, y, z)$ et $\varphi(x, y, z)$ correspondent respectivement au module et à la phase de l'onde lumineuse d'exposition 14 et $i^2 = -1$.

Ainsi, l'expression complexe $A$ est une grandeur complexe, dont l'argument et le module sont respectivement représentatifs de la phase et de l'intensité de l'onde lumineuse d'exposition 14 détectée par le capteur d'image 16 pour former l'image $I_{P0}$.

A partir de l'image $I_{P0}$ acquise par le capteur d'image 16, on peut obtenir une expression complexe de l'onde lumineuse d'exposition 14 par une convolution mettant en œuvre un opérateur de propagation holographique, selon l'expression :

$$A(x, y, z) = \sqrt{I_{P0}(x_0, y_0, z_0)} * h_{xyz} \quad (2),$$

* désignant l'opérateur produit de convolution. $x_0, y_0, z_0$ sont les coordonnées dans le plan de détection $P_0$

L'opérateur de propagation holographique h a pour fonction de décrire la propagation de la lumière entre un point de coordonnées $(x_0, y_0, z_0)$ dans le plan de détection $P_0$ et un point de coordonnées $(x, y, z)$. Il peut s'agir d'un opérateur de Fresnel, tel que :

$$h_{xyz} = \frac{1}{i\lambda z} e^{j2\pi\frac{z}{\lambda}} \exp\left(i\pi\frac{x^2+y^2}{\lambda z}\right) \quad (3)$$

Il est usuel d'appliquer un produit de convolution de l'image $I_{P0}$ acquise par le capteur d'image (ou l'image $\sqrt{I_{P0}}$ ) par l'opérateur de propagation $h$. Cela permet d'obtenir une image complexe $A_z$ représentant une distribution spatiale de l'expression complexe $A$ dans un plan de reconstruction $P_z$, s'étendant à une distance $|z|$ du plan de détection $P_0$, selon l'axe Z. Lorsque le plan de reconstruction correspond au plan de l'échantillon $P_{10}$, on obtient une image complexe $A_{10}$, qui correspond à une image complexe de l'échantillon.

Cependant, comme indiqué en lien avec l'art antérieur, une image complexe reconstruite selon (2) est généralement affectée d'un bruit de reconstruction pouvant être significatif. Cela est dû au fait que l'image acquise par le capteur d'image ne comporte pas d'information relative à la phase de l'onde lumineuse d'exposition 14.

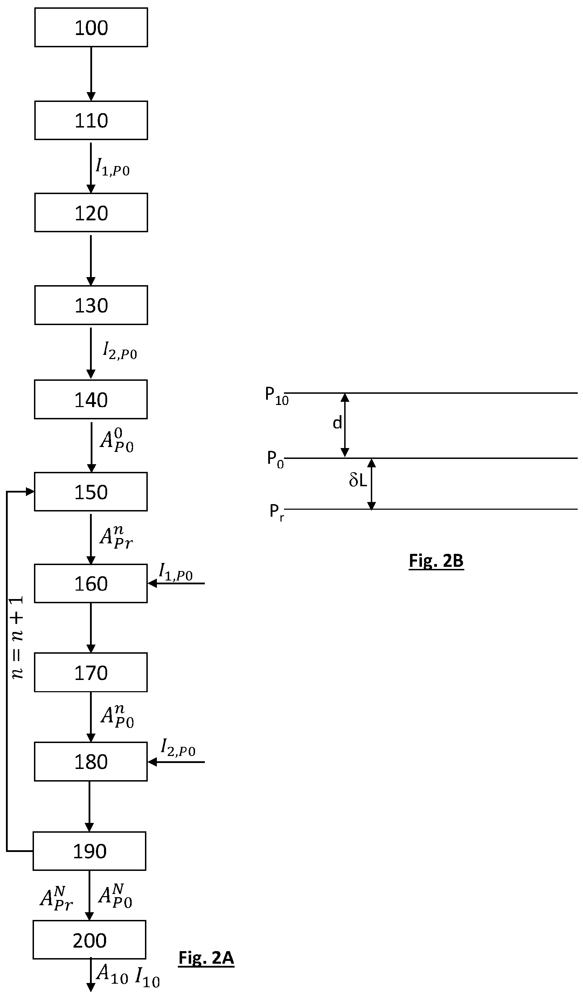

Les inventeurs proposent un procédé simple permettant de remédier à ce problème. Les principales étapes sont représentées sur la figure 2A, et décrites ci-après.

Etape 100 : Illumination de l'échantillon 10 à l'aide de la source lumineuse 11.

Etape 110 : Acquisition d'une première image $I_{1,P0}$ de l'échantillon 10 par le capteur d'image 16, cette image formant un premier hologramme. La première image $I_{1,P0}$ est acquise selon le plan de détection $P_0$.

Lors de l'acquisition de la première image $I_{1,P0}$, l'onde lumineuse d'exposition 14 se propage entre l'échantillon 10 et le capteur d'image 20 selon un premier chemin optique $L_1$. Le chemin optique correspond à la distance parcourue multipliée par l'indice de réfraction du milieu à travers lequel l'onde lumineuse 14 se propage entre l'échantillon et le capteur d'image.

Dans cet exemple, lors de l'acquisition de la première image, l'espace s'étendant entre l'échantillon et le capteur d'image est rempli par de l'air.

Etape 120 : Modification du chemin optique.

Au cours de cette étape, le chemin optique suivi par l'onde lumineuse d'exposition, au cours de l'acquisition de la première image, est modifié. La modification du chemin optique est effectuée sans déplacement du capteur d'image relativement à l'échantillon. La distance entre le capteur d'image 16 et l'échantillon 10 reste la même que lors de l'acquisition de la première image.

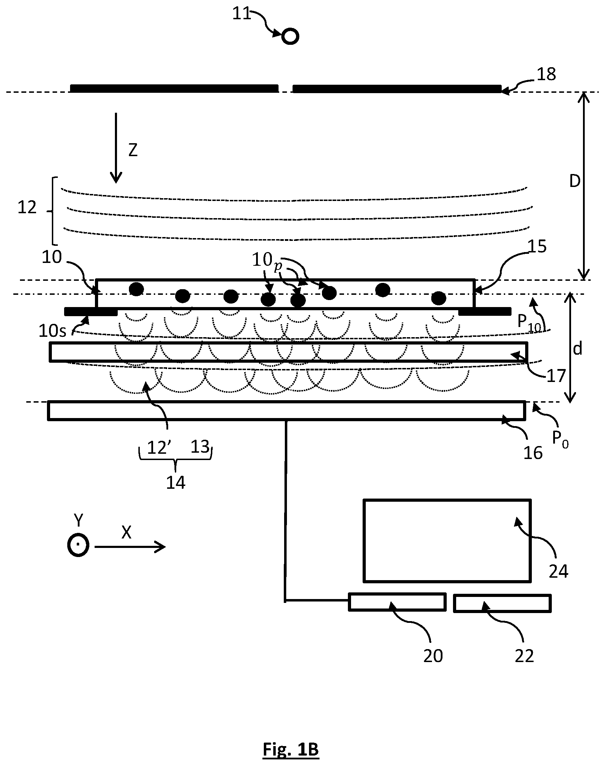

Le chemin optique est modifié en modifiant un indice de réfraction optique, entre le capteur d'image et l'échantillon. Dans une partie de l'espace séparant l'échantillon du capteur d'image, le chemin optique est modifié. Dans cet exemple, comme représenté sur la figure 1B, le chemin optique est modifié en insérant, entre l'échantillon et le capteur d'image, un matériau transparent présentant un indice de réfraction différent de celui de l'air. Il peut par exemple s'agir d'une lame 17, d'épaisseur millimétrique, d'un matériau tel que le verre, ou un polymère transparent, ou de l'eau. En fonction de l'indice de réfraction du matériau, son interposition entre l'échantillon et le capteur d'image, induit une diminution ou une augmentation du chemin optique parcouru par l'onde lumineuse d'exposition 14. Dans cet exemple, l'interposition de la lame 17, dont le matériau présente un indice de réfraction supérieur à celui de l'air, engendre une augmentation du chemin optique parcouru par l'onde lumineuse d'exposition.

D'une façon générale, lors l'acquisition de la première image, un premier matériau, d'un premier indice de réfraction $n_1$, s'étend entre l'échantillon et le capteur d'image. La modification du chemin optique consiste à remplacer tout ou une partie du premier matériau par un deuxième matériau, présentant un deuxième indice de réfraction $n_2$, différent du premier indice de réfraction n1.

La modification du chemin optique conduit à une variation du premier chemin optique $L_1$ notée $\delta L$, positive ou négative.

Ainsi, si $L_2$ est le deuxième chemin optique, $L_2 = L_1 + \delta L$.

Etape 130 : Acquisition d'une deuxième image $I_{2,P0}$ de l'échantillon 10 par le capteur d'image 16, cette image formant un deuxième hologramme. De même que la première image, la deuxième image est acquise selon le plan de détection $P_0$. Lors de l'acquisition de la deuxième image, l'onde lumineuse d'exposition parcourt le deuxième chemin optique $L_2$, différent du premier chemin optique $L_1$, tandis que la distance entre le capteur d'image et l'échantillon demeure inchangée.

Etape 140 : Initialisation.

Au cours de cette étape, une image de départ, choisie parmi la première image ou la deuxième image, est utilisée pour former une image d'initialisation $A_{P0}^0$. Dans cet exemple, l'image de départ est la première image $I_{1,P0}$ et l'image d'initialisation est la racine carrée de la première image : $A_{P0}^0 = \sqrt{I_{1,P0}}$.

Ainsi, chaque pixel (x, y) de l'image $A_{P0}^0$ est tel que $A_{P0}^0(x, y) = \sqrt{I_{1,P0}(x, y)}$.

Les étapes 150 à 180 sont effectuées de façon itérative, à chaque itération étant assigné un rang n.

Etape 150 : Propagation.

Au cours de cette étape, l'image initiale $A_{P0}^0$, ou l'image $A_{P0}^{n-1}$ résultant d'une itération précédente, dans le plan de détection $P_0$, est propagée dans un plan de reconstruction $P_r$, distant du plan de détection $P_0$. La distance entre le plan de détection $P_0$ et le plan de reconstruction $P_r$ est égale à la variation du chemin optique $\delta L$ résultant de l'étape 120. Ainsi, au cours de cette étape, on obtient une image complexe reconstruite $A_{Pr}^n$ dans le plan de reconstruction $P_r$, telle que :

$$A_{Pr}^n = A_{P0}^{n-1} * h_{\delta L} \ (4)$$

L'exposant n désigne le rang de l'itération.

La figure 2B illustre la position du plan de reconstruction $P_r$ par rapport au plan de détection $P_d$ et par rapport au plan de l'échantillon $P_{10}$. Sur la figure 2B, on a considéré $\delta L > 0$.

$h_{\delta L}$ correspond à un opérateur de propagation propageant l'image selon une distance $\delta L$.

Etape 160 : mise à jour de l'image complexe

$A_{Pr}^n$ dans le plan de reconstruction $P_r$.

Au cours de cette étape, l'image complexe $A_{Pr}^n$ résultant de l'étape 150 est mise à jour en fonction d'une image d'arrivée. L'image d'arrivée est choisie parmi la première image ou la deuxième image, et ne correspond pas à l'image de départ. Autrement dit si l'image de départ, à partir de laquelle l'initialisation a été effectuée, est la première image $I_{1,P0}$, l'image d'arrivée est la deuxième image $I_{2,P0}$. Inversement, si l'image de départ est la deuxième image $I_{2,P0}$, l'image d'arrivée est la première image $I_{1,P0}$,

L'image complexe $A_{Pr}^n$ formée dans le plan de reconstruction comporte un module et une phase. La mise à jour consiste à remplacer le module de l'image complexe $A_{Pr}^n$ en fonction de l'image d'arrivée. Plus précisément, il s'agit de remplacer le module de l'image complexe $A_{Pr}^n$ par le module de l'image d'arrivée. Dans cet exemple, l'image d'arrivée est la deuxième image $I_{2,P0}$,

Ainsi, la mise à jour consiste à remplacer le module de $A_{Pr}^n$ par $\sqrt{I_{2,P0}}$.

Ainsi, pour tout pixel $(x, y)$ de l'image $A_{Pr}^n$ :

$$mod\left(A_{Pr}^n(x,y)\right) = \sqrt{I_{2,P0}(x,y)} \quad (5)$$

*mod* désigne l'opérateur module.

Etape 170 : rétropropagation

Au cours de cette étape, de l'image résultant de l'étape 160 est rétropropagée dans le plan de détection $P_0$ :

$$A_{P0}^n = A_{Pr}^n * h_{-\delta L} \quad (6)$$

Etape 180 : mise à jour de l'image complexe $A_{P0}^n$ dans le plan de détection $P_0$.

Au cours de cette étape, l'image complexe résultant de l'étape 170 est mise à jour en fonction de l'image de départ. Plus précisément, il s'agit de remplacer le module de l'image complexe $A_{P0}^n$ par le module de l'image de départ. Dans cet exemple, l'image de départ est la première image $I_{1,P0}$.

Ainsi, la mise à jour consiste à remplacer le module de $A_{P0}^n$ par $\sqrt{I_{1,P0}}$.

Ainsi, pour tout pixel *(x, y)* de l'image $A_{P0}^n$, $mod\left(A_{P0}^n(x,y)\right) = \sqrt{I_{1,P0}(x,y)}$.

Etape 190 : Réitération.

Au cours de cette étape, l'image $A_{P0}^n$ résultant de l'étape 180 est utilisée dans l'étape 150 d'une itération suivante.

Les itérations des étapes 150 à 190 se poursuivent jusqu'à l'atteinte d'un critère d'arrêt des itérations. Il peut s'agir d'un nombre prédéterminé d'itérations. Le critère d'arrêt des itérations peut également être un écart faible entre les phases respectives de deux images complexes, formées soit dans le plan de détection, soit dans le plan de reconstruction, au cours de deux itérations consécutives. Au cours de chaque itération, on peut calculer un écart moyen de phase, qui est :

- soit un écart moyen entre les phases de chaque pixel de l'image complexe $A_{Pr}^n$ formée, dans le plan de reconstruction $P_r$, lors de l'étape 150 de l'itération et de l'itération précédente ;
- soit un écart moyen entre les phases de chaque pixel de l'image complexe $A_{P0}^n$ formée, dans le plan de détection $P_0$, lors de l'étape 170 de l'itération et de l'itération précédente.

Lorsque l'écart moyen est inférieur à une valeur seuil prédéterminée, ou lorsqu'une différence d'écarts moyens, entre deux itérations successives, est inférieure à un seuil prédéterminé, le critère d'arrêt des itérations est atteint.

Etape 200 : Obtention d'une image de l'échantillon.

A la suite des itérations, on dispose d'images complexes $A_{Pr}^N$ ou $A_{P0}^N$ considérées comme représentatives de l'onde lumineuse d'exposition 14. N représente le rang de la dernière itération.

L'une ou l'autre des images complexes est propagée dans le plan de l'échantillon $P_{10}$, de façon à obtenir une image complexe de l'échantillon $A_{10}$. Par exemple, l'image $A_{P0}^N$ est propagée selon l'expression :

$$A_{10} = A_{P0}^N * h_d \quad (7)$$

où d désigne la distance entre le plan de l'échantillon $P_{10}$ et le plan de détection $P_0$.

Alternativement, l'image $A_{Pr}^N$ est propagée, auquel cas :

$$A_{10} = A_{Pr}^N * h_{d+\delta L} \quad (8)$$

Il est ensuite possible de former une image d'observation $I_{10}$ de l'échantillon, permettant de visualiser ce dernier. L'image d'observation est formée à partir du module de l'image complexe de l'échantillon $A_{10}$, ou

de sa phase, ou de sa partie réelle, ou de sa partie imaginaire.

Essais expérimentaux

Le procédé précédemment décrit a été mis en œuvre en utilisant une source de lumière LED (diode électroluminescente), émettant dans une bande spectrale centrée sur la longueur d'onde de 450 nm (15 nm de largeur spectrale), de diamètre 62 $\mu$m. La distance entre la source de lumière et l'échantillon était de 16 cm. L'échantillon était une mire USAF transparente. Le capteur d'image était un capteur CMOS monochrome (22.3 mm x 14.9 mm - taille des pixels : 4.3 $\mu$m x 4.3 $\mu$m). La propagation holographique a été réalisée selon les principes décrits dans le pararaphe 3.2 de la publication McLeod E. and Ozcan A., « Unconventional methods of imaging : computational microscopy and compact implementation », 2016, Rep. Prog. Phys. 79 076001.

Une première image a été acquise, en laissant un espace d'air d'épaisseur 500 $\mu$m entre l'échantillon et le capteur d'image. Une deuxième image a été acquise, en comblant l'espace d'air de 500 $\mu$m entre l'échantillon et le capteur d'image par de l'eau (indice de réfraction = 1. 33). La première image a été considérée comme une image de départ. Au cours de la mise en œuvre de l'algorithme, le plan de reconstruction $P_r$ était décalé de 165 $\mu$m par rapport au plan de détection $P_0$.

L'image complexe issue de l'algorithme, dans le plan de détection, a été propagée selon une distance de 2200 $\mu$m, cette distance correspondant à la longueur optique, dans l'air, entre le plan de détection et l'échantillon.

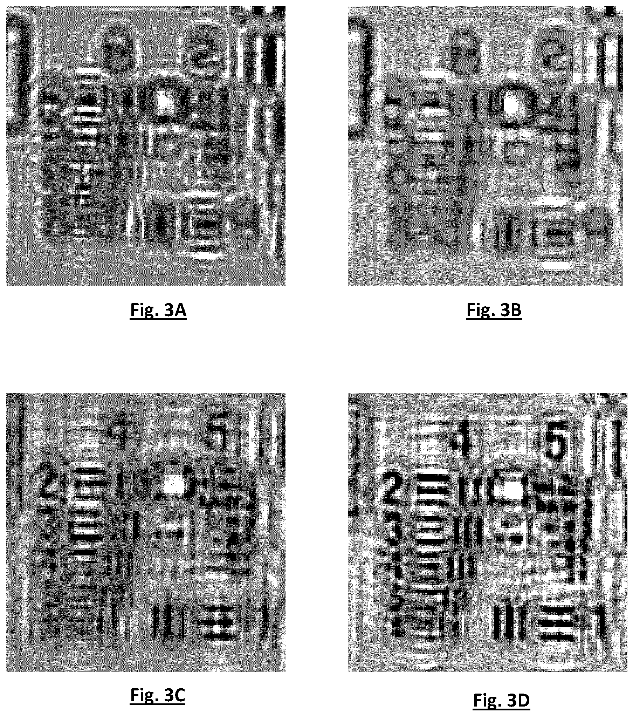

La figure 3A représente un hologramme, correspondant à la première image.

La figure 3B représente une reconstruction effectuée selon un algorithme de l'art antérieur, mettant en œuvre un masque. La figure 3C représente une reconstruction effectuée selon un autre algorithme de l'art antérieur, dans lequel plusieurs images sont acquises en faisant varier la distance entre le capteur d'image et l'échantillon.

La figure 3D est une image du module de l'image complexe résultant de la mise en œuvre de l'algorithme.

On observe que la résolution spatiale de l'image résultant de l'algorithme (figure 3D) est supérieure à celle de l'hologramme (figure 3A), ainsi qu'à l'image de la figure 3B. Elle est comparable à l'image de la figure 3C, cette dernière ayant été obtenue à partir d'images formées en déplaçant le capteur d'image par rapport à l'échantillon.

Variante

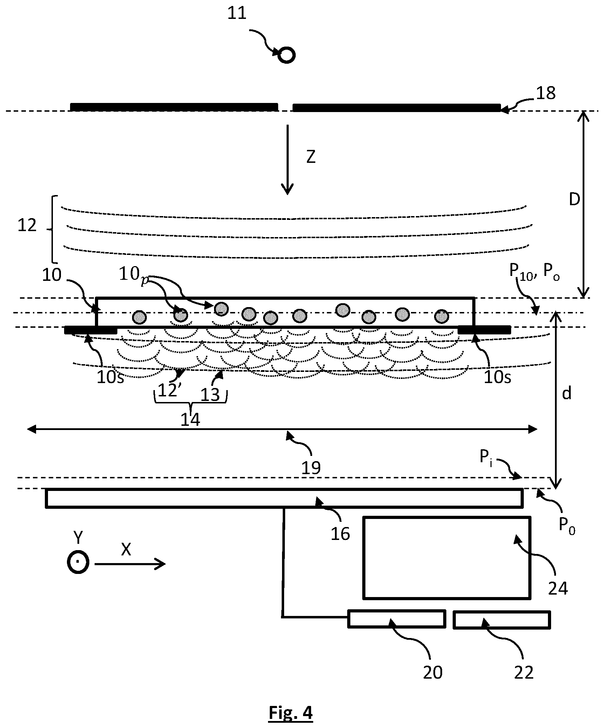

La figure 4 schématise un dispositif permettant une mise en œuvre de l'invention. Contrairement au dispositif représenté sur la figure 1A, le dispositif de la figure 4 comporte un système optique 19 de formation d'image. Le système optique 19 définit un plan image et un plan objet. Le système optique peut être une lentille ou un objectif. Lors de l'acquisition de l'image de l'échantillon, le capteur d'image est disposé selon une configuration défocalisée. Le plan de détection est décalé par rapport au plan image $P_i$ et/ou le plan selon lequel s'étend l'échantillon est décalé par rapport au plan objet $P_o$. Le décalage est généralement faible, en étant de préférence inférieur à 1 mm, et typiquement dans une plage 50 $\mu$m - 500 $\mu$m. Dans l'exemple de la figure 4, le plan de détection est décalé par rapport au plan image et le plan selon lequel s'étend l'échantillon est confondu avec le plan objet.

L'invention pourra être mise en œuvre pour l'observation d'échantillons dans le domaine de la biologie ou de la santé, dans le domaine du contrôle de l'environnement ou dans d'autres domaines industriels, y compris l'agroalimentaire

**Revendications**

1.   Procédé d'obtention d'une image d'un échantillon (10), comportant les étapes suivantes :

   - a) illumination de l'échantillon à l'aide d'une source de lumière (11), configurée pour émettre une onde lumineuse (12) se propageant vers l'échantillon ;
   - b) acquisition, à l'aide d'un capteur d'image (16), d'une première image ($I_{1,P0}$) de l'échantillon (10), formée dans un plan de détection ($P_0$), l'échantillon étant disposé entre la source de lumière (11) et le capteur d'image (16), la première image étant représentative d'une onde lumineuse d'exposition (14) se propageant à partir de l'échantillon, vers le capteur d'image, selon un premier chemin optique ($L_1$), le procédé étant tel que lors de l'acquisition de la première image, un premier matériau, présentant un premier indice de réfraction ($n_1$), s'étend entre l'échantillon et le capteur d'image ;

   le procédé étant **caractérisé en ce qu'**il comporte également, suite à l'étape b)

   - c) modification d'un indice de réfraction optique, entre le capteur d'image et l'échantillon, de façon à obtenir une variation ($\delta L$) du chemin optique de l'onde lumineuse d'exposition (14), l'étape c) comportant un remplacement de tout ou partie du premier matériau par un deuxième matériau, le deuxième matériau présentant un deuxième indice de réfraction ($n_2$), différent du premier indice de réfraction;
   - d) suite à l'étape c), acquisition, à l'aide du capteur d'image (16), d'une deuxième image ($I_2$,

$_{P0}$) de l'échantillon (10), formée dans le plan de détection ($P_0$), la deuxième image étant représentative de l'onde lumineuse d'exposition (14) se propageant à partir de l'échantillon, vers le capteur d'image, selon un deuxième chemin optique ($L_2$), le deuxième chemin optique correspondant au premier chemin optique ($L_1$) additionné de la variation du chemin optique ($\delta L$) résultant de l'étape c), le deuxième chemin optique ($L_2$) étant supérieur ou inférieur au premier chemin optique ($L_1$) ;

- e) mise en œuvre d'un algorithme itératif comportant les sous-étapes suivantes :

• ei) formation d'une image initiale ( $A_{P0}^0$ ), dans le plan de détection ($P_0$), à partir d'une image de départ choisie parmi la première image ($I_{1,P0}$) ou la deuxième image ($I_{2,P0}$):

• eii) application d'un opérateur de propagation holographique ($h$) à l'image initiale ( $A_{P0}^0$ ) ou à une image complexe ( $A_{P0}^{n-1}$ ) formée dans le plan de détection résultant d'une itération précédente, de façon à obtenir une image complexe ( $A_{Pr}^n$ ) reconstruite dans un plan de reconstruction ($P_r$), la distance entre le plan de reconstruction et le plan de détection correspondant à la variation de chemin optique ($\delta L$) obtenue lors de l'étape c), l'image complexe formée dans le plan de reconstruction présentant un module et une phase définis en chaque pixel de ladite image ;

• eiii) dans le plan de reconstruction ($P_r$), mise à jour du module de l'image complexe ( $A_{Pr}^n$ ) formée dans le plan de reconstruction, résultant de eii), en chacun de ses pixels, en fonction d'une image d'arrivée, l'image d'arrivée étant choisie parmi la première image ou de la deuxième image, l'image d'arrivée étant différente de l'image de départ choisie lors de l'étape ei), l'image complexe ( $A_{Pr}^n$ ), dans le plan de reconstruction, étant mise à jour en remplaçant, en chaque pixel, le module de ladite image par la racine carrée de l'image d'arrivée;

• eiv) application d'un opérateur de propagation holographique à l'image complexe mise à jour lors de eiii), pour former une image complexe dans le plan de détection ( $A_{P0}^n$ ), l'image complexe formée dans le plan de détection ($P_0$) comportant un module et une phase, définis en chaque pixel de ladite image ;

• ev) mise à jour du module de l'image

complexe ( $A_{P0}^n$ ), formée dans le plan de détection lors de eiv), en chacun de ses pixels, en fonction de l'image de départ, l'image complexe ( $A_{P0}^n$ ), dans le plan de détection, étant mise à jour en remplaçant, en chaque pixel, le module de ladite image par la racine carrée de l'image de départ;

• evi) réitération des étapes eii) à ev) jusqu'à l'atteinte d'un critère d'arrêt des itérations ;

- f) obtention d'une image de l'échantillon ($A_{10}$, $I_{10}$) à partir d'une image complexe ( $A_{P0}^N, A_{Pr}^N$ )) résultant de l'étape e), formée dans le plan de détection ou dans le plan de reconstruction.

**2.** Procédé selon l'une quelconque des revendications précédentes, dans lequel le critère d'arrêt des itérations est un nombre prédéterminé d'itérations des étapes eii) à ev).

**3.** Procédé selon l'une quelconque des revendications 1 à 2, dans lequel l'étape evi) de chaque itération, après la première itération, comporte un calcul d'un écart moyen de phase, l'écart moyen de phase comportant :

- un écart moyen entre les phases de chaque pixel de l'image complexe ( $A_{Pr}^n$ ) formée, dans le plan de reconstruction, au cours de l'étape eii) de l'itération ainsi qu'au cours de l'itération précédente ;

- ou un écart moyen entre les phases de chaque pixel de l'image complexe ( $A_{P0}^n$ ) formée, dans le plan de détection, au cours l'étape eiv) de l'itération ainsi qu'au cours de l'itération précédente ;

le critère d'arrêt des itérations étant atteint lorsque l'écart moyen est inférieur à un seuil prédéterminé ou lorsqu'une différence d'écarts moyens, entre deux itérations successives, est inférieure à un seuil prédéterminé.

**4.** Procédé selon l'une quelconque des revendications précédentes, dans lequel la distance entre le capteur d'image et l'échantillon est identique lors des étapes b) et d).

**5.** Procédé selon l'une quelconque des revendications précédentes, dans lequel aucune optique de formation d'image n'est disposée entre le capteur d'image et l'échantillon.

**6.** Procédé selon l'une quelconque des revendications 1 à 4 dans lequel :

- un système optique (19) s'étend entre l'échantillon et le capteur d'image, le système optique définissant un plan objet ($P_o$) et un plan image ($P_i$) ;
- l'échantillon s'étend selon un plan d'échantillon ($P_{10}$), le plan d'échantillon est décalé par rapport au plan objet ($P_o$);
- et/ou le plan de détection ($P_o$) est décalé par rapport au plan image ($P_i$).

7. Procédé selon l'une quelconque des revendications précédentes, dans lequel lors de l'étape f), l'image de l'échantillon est obtenue en appliquant un opérateur de reconstruction (h):

- à l'image complexe formée dans le plan de détection ($A_{P0}^n$) lors de la dernière itération des étapes eii) à ev);
- ou à l'image complexe formée dans le plan de reconstruction ($A_{Pr}^n$), lors de la dernière itération des étapes eii) à ev).

8. Dispositif d'observation d'un échantillon, comportant :

- une source de lumière (11), configurée pour illuminer l'échantillon ;
- un capteur d'image (16), configuré pour acquérir une image de l'échantillon ;
- un support d'échantillon ($10_s$), configuré pour maintenir l'échantillon entre la source de lumière et le capteur d'image ;

le dispositif étant configuré pour permettre de disposer, entre l'échantillon et le capteur d'image :

- soit un premier matériau, d'un premier indice de réfraction ($n_1$), de telle sorte que le capteur d'image est configuré pour acquérir une première image ($I_{1,P0}$) de l'échantillon lorsque le premier matériau est disposé entre l'échantillon et le capteur d'image ;
- soit un deuxième matériau, à la place du premier matériau, d'un deuxième indice de réfraction ($n_2$), différent du premier indice de réfraction, de telle sorte que le capteur d'image est configuré pour acquérir une deuxième image ($I_{2,P0}$) de l'échantillon, lorsque le deuxième matériau est disposé entre l'échantillon et le capteur d'image;
- le dispositif comportant une unité de traitement (20), programmée pour mettre en œuvre les étapes e) et f) d'un procédé selon l'une quelconque des revendications précédentes.

9. Procédé selon la revendication 8, dans lequel le support d'échantillon ($10_s$) est fixe par rapport au capteur d'image (16), de telle sorte que la distance entre l'échantillon et le capteur d'image est identique lors de l'acquisition de la première image et lors de l'acquisition de la deuxième image.

10. Dispositif selon l'une quelconque des revendications 8 ou 9, dans lequel aucune optique de formation d'image n'est disposée entre le capteur d'image et l'échantillon.

11. Dispositif selon l'une quelconque des revendications 8 à 10 dans lequel :

- un système optique (19) s'étend entre l'échantillon et le capteur d'image, le système optique définissant un plan objet ($P_o$) et un plan image ($P_i$) ;
- l'échantillon s'étend selon un plan d'échantillon ($P_{10}$), le plan d'échantillon est décalé par rapport au plan objet ($P_o$);
- et/ou le plan de détection ($P_0$) est décalé par rapport au plan image ($P_i$).

**Patentansprüche**

1. Verfahren zum Erhalten eines Bildes einer Probe (10), umfassend die folgenden Schritte:

- a) Beleuchten der Probe mithilfe einer Lichtquelle (11), die dazu ausgestaltet ist, eine Lichtwelle (12) zu emittieren, die sich zu der Probe hin ausbreitet;
- b) Erfassen, mithilfe eines Bildsensors (16), eines ersten Bildes ($I_{1,P0}$) der Probe (10), das in einer Detektionsebene ($P_0$) gebildet wird, wobei die Probe zwischen der Lichtquelle (11) und dem Bildsensor (16) angeordnet ist, wobei das erste Bild repräsentativ für eine Belichtungslichtwelle (14) ist, die sich von der Probe aus zu dem Bildsensor hin entlang eines ersten optischen Pfads ($L_1$) ausbreitet, wobei das Verfahren dergestalt ist, dass sich bei dem Erfassen des ersten Bildes ein erstes Material, das einen ersten Brechungsindex ($n_1$) aufweist, zwischen der Probe und dem Bildsensor erstreckt;

wobei das Verfahren **dadurch gekennzeichnet ist, dass** es ferner, nach dem Schritt b), umfasst

- c) Modifizieren eines optischen Brechungsindex zwischen dem Bildsensor und der Probe, so dass eine Änderung ($\delta L$) des optischen Pfads der Belichtungslichtwelle (14) erhalten wird, wobei der Schritt c) ein Ersetzen des gesamten oder eines Teils des ersten Materials durch ein zweites Material umfasst, wobei das zweite Material einen zweiten Brechungsindex ($n_2$) auf-

weist, der von dem ersten Brechungsindex verschieden ist;

- d) nach dem Schritt c) Erfassen, mithilfe des Bildsensors (16), eines zweiten Bildes ($I_{2,P0}$) der Probe (10), das in der Detektionsebene ($P_0$) gebildet wird, wobei das zweite Bild repräsentativ für die Belichtungslichtwelle (14) ist, die sich von der Probe aus zu dem Bildsensor hin entlang eines zweiten optischen Pfads ($L_2$) ausbreitet, wobei der zweite optische Pfad dem ersten optischen Pfad ($L_1$) zuzüglich der aus dem Schritt c) resultierenden Änderung des optischen Pfads ($\delta L$) entspricht, so dass der zweite optische Pfad ($L_2$) über oder unter dem ersten optischen Pfad ($L_1$) ist;

- e) Ausführen eines iterativen Algorithmus, umfassend die folgenden Teilschritte:

• ei) Bilden eines Anfangsbildes ($A_{P0}^0$), in der Detektionsebene ($P_0$), ausgehend von einem Ausgangsbild, das aus dem ersten Bild ($I_{1,P0}$) oder dem zweiten Bild ($I_{2,P0}$) ausgewählt wird;

• eii) Anwenden eines holografischen Ausbreitungsoperators ($h$) auf das Ausgangsbild ($A_{P0}^0$), oder auf ein komplexes Bild ($A_{P0}^{n-1}$), das in der Detektionsebene gebildet wird und aus einer vorhergehenden Iteration resultiert, so dass ein komplexes Bild ($A_{Pr}^n$) erhalten wird, das in einer Rekonstruktionsebene ($P_r$) rekonstruiert wird, wobei der Abstand zwischen der Rekonstruktionsebene und der Detektionsebene der Änderung der bei dem Schritt c) erhaltenen Änderung des optischen Pfads ($\delta L$) entspricht, wobei das in der Rekonstruktionsebene gebildete komplexe Bild ein Modul und eine Phase aufweist, die in jedem Pixel des Bildes definiert sind;

• eiii) in der Rekonstruktionsebene ($P_r$), Aktualisieren des Moduls des in der Rekonstruktionsebene gebildeten komplexen Bildes ($A_{Pr}^n$), das aus eii) resultiert, in jedem seiner Pixel in Abhängigkeit von einem Zielbild, wobei das Zielbild aus dem ersten Bild oder dem zweiten Bild ausgewählt ist, wobei das Zielbild von dem bei dem Schritt ei) ausgewählten Ausgangsbild verschieden ist, wobei das komplexe Bild ($A_{Pr}^n$), in der Rekonstruktionsebene, aktualisiert wird, indem, in jedem Pixel, das Modul des Bildes durch die Quadratwurzel des Zielbildes ersetzt wird;

• eiv) Anwenden eines holografischen Ausbreitungsoperators auf das komplexe Bild, bei eiii) aktualisiert wird, um ein komplexes Bild in der Detektionsebene ($A_{P0}^n$) zu bilden, wobei das in der Detektionsebene ($P_0$) gebildete komplexe Bild ein Modul und eine Phase umfasst, die in jedem Pixel des Bildes definiert sind;

• ev) Aktualisieren des Moduls des komplexen Bildes ($A_{P0}^n$), das bei eiv) in der Detektionsebene gebildet wird, in jedem seiner Pixel in Abhängigkeit von dem Ausgangsbild, wobei das komplexe Bild ($A_{P0}^n$), in der Detektionsebene, aktualisiert wird, indem, in jedem Pixel, das Modul des Bildes durch die Quadratwurzel des Ausgangsbildes ersetzt wird;

• evi) Reiteration der Schritte eii) bis ev) bis zum Erreichen eines Stoppkriteriums der Iterationen;

- f) Erhalten eines Bildes der Probe ($A_{10}$, $I_{10}$) ausgehend von einem aus dem Schritt e) resultierenden komplexen Bild ($A_{P0}^N$, $A_{Pr}^N$)), das in der Detektionsebene oder in der Rekonstruktionsebene gebildet wird.

2. Verfahren nach einem der vorhergehenden Ansprüche, wobei das Stoppkriterium der Iterationen eine vorbestimmte Anzahl von Iterationen der Schritte eii) bis ev) ist.

3. Verfahren nach einem der Ansprüche 1 bis 2, wobei der Schritt evi) jeder Iteration, nach der ersten Iteration, eine Berechnung einer mittleren Phasenabweichung umfasst, wobei die mittlere Phasenabweichung umfasst:

- eine mittlere Abweichung zwischen den Phasen jedes Pixels des komplexen Bildes ($A_{Pr}^n$), das, in der Rekonstruktionsebene, während des Schritts eii) der Iteration sowie während der vorhergehenden Iteration gebildet wird;
- oder eine mittlere Abweichung zwischen den Phasen jedes Pixels des komplexen Bildes ($A_{P0}^n$), das, in der Detektionsebene, während des Schritts eiv) der Iteration sowie während der vorhergehenden Iteration gebildet wird;

wobei das Stoppkriterium der Iterationen erreicht ist, wenn die mittlere Abweichung geringer als ein vorbestimmter Schwellenwert ist oder wenn eine Differenz mittlerer Abweichungen, zwischen zwei aufeinander folgenden Iterationen, geringer als ein vorbestimmter Schwellenwert ist.

**4.** Verfahren nach einem der vorhergehenden Ansprüche, wobei der Abstand zwischen dem Bildsensor und der Probe bei den Schritten b) und d) identisch ist.

**5.** Verfahren nach einem der vorhergehenden Ansprüche, wobei keine Bildgebungsoptik zwischen dem Bildsensor und der Probe angeordnet ist.

**6.** Verfahren nach einem der Ansprüche 1 bis 4, wobei:

- sich ein optisches System (19) zwischen der Probe und dem Bildsensor erstreckt, wobei das optische System eine Objektebene ($P_o$) und eine Bildebene ($P_i$) definiert;
- die Probe sich entlang einer Probenebene ($P_{10}$) erstreckt, wobei die Probenebene in Bezug auf die Objektebene ($P_o$) versetzt ist;
- und/oder die Detektionsebene ($P_0$) in Bezug auf die Bildebene ($P_i$) versetzt ist.

**7.** Verfahren nach einem der vorhergehenden Ansprüche, wobei bei dem Schritt f) das Bild der Probe erhalten wird, indem ein Rekonstruktionsoperator (h) angewandt wird:

- auf das komplexe Bild, das in der Detektionsebene ($A_{P0}^n$) bei der letzten Iteration der Schritte eii) bis ev) gebildet wird;
- oder auf das komplexe Bild, das in der Rekonstruktionsebene ($A_{Pr}^n$) bei der letzten Iteration der Schritte eii) bis ev) gebildet wird.

**8.** Vorrichtung zur Betrachtung einer Probe, umfassend:

- eine Lichtquelle (11), die dazu ausgestaltet ist, die Probe zu beleuchten;
- einen Bildsensor (16), der dazu ausgestaltet ist, ein Bild der Probe zu erfassen;
- einen Probenträger ($10_s$), der dazu ausgestaltet ist, die Probe zwischen der Lichtquelle und dem Bildsensor zu halten;

wobei die Vorrichtung dazu ausgestaltet ist, zu ermöglichen, dass zwischen der Probe und dem Bildsensor angeordnet wird:

- entweder ein erstes Material mit einem ersten Brechungsindex ($n_1$), so dass der Bildsensor dazu ausgestaltet ist, ein erstes Bild ($I_{1,P0}$) der Probe zu erfassen, wenn das erste Material zwischen der Probe und dem Bildsensor angeordnet ist;
- oder ein zweites Material, anstelle des ersten Materials, mit einem zweiten Brechungsindex ($n_2$), der von dem ersten Brechungsindex verschieden ist, so dass der Bildsensor dazu ausgestaltet ist, ein zweites Bild ($I_{2,P0}$) der Probe zu erfassen, wenn das zweite Material zwischen der Probe und dem Bildsensor angeordnet ist;
- wobei die Vorrichtung eine Verarbeitungseinheit (20) umfasst, die dazu programmiert ist, die Schritte e) und f) eines Verfahrens nach einem der vorhergehenden Ansprüche auszuführen.

**9.** Verfahren nach Anspruch 8, wobei der Probenträger ($10_s$) in Bezug auf den Bildsensor (16) ortsfest ist, so dass der Abstand zwischen der Probe und dem Bildsensor beim Erfassen des ersten Bildes und beim Erfassen des zweiten Bildes identisch ist.

**10.** Vorrichtung nach einem der Ansprüche 8 oder 9, wobei keine Bildgebungsoptik zwischen dem Bildsensor und der Probe angeordnet ist.

**11.** Vorrichtung nach einem der Ansprüche 8 bis 10, wobei:

- sich ein optisches System (19) zwischen der Probe und dem Bildsensor erstreckt, wobei das optische System eine Objektebene ($P_o$) und eine Bildebene ($P_i$) definiert;
- die Probe sich entlang einer Probenebene ($P_{10}$) erstreckt, wobei die Probenebene in Bezug auf die Objektebene ($P_o$) versetzt ist;
- und/oder die Detektionsebene ($P_0$) in Bezug auf die Bildebene ($P_i$) versetzt ist.

**Claims**

**1.** Method for obtaining an image of a sample (10), comprising the following steps:

- a) illuminating the sample using a light source (11) configured to emit a light wave (12) that propagates to the sample;
- b) acquiring, using an image sensor (16), a first image ($I_{1,P0}$) of the sample (10), said image being formed in a detection plane ($P_0$), the sample being placed between the light source (11) and the image sensor (16), the first image being representative of an exposure light wave (14) propagating from the sample, to the image sensor, along a first optical path ($L_1$), the method being such that during the acquisition of the first image, a first material, having a first refractive index ($n_1$), lies between the sample and the image sensor;

the method being **characterised in that** it also comprises, following step b)

- c) modifying an optical refractive index, between the image sensor and the sample, so as to obtain a variation ($\delta L$) in the optical path of the exposure light wave (14), step c) comprising replacing all or some of this first material by a second material, the second material having a second refractive index ($n_2$) different from the first refractive index;

- d) following step c), acquiring, using the image sensor (16), a second image ($I_{2,P0}$) of the sample (10), said image being formed in the detection plane ($P_0$), the second image being representative of the exposure light wave (14) propagating, from the sample, to the image sensor, along a second optical path ($L_2$), the second optical path corresponding to the first optical path ($L_1$) plus the variation ($\delta L$) in optical path resulting from step c), so that the second optical path ($L_2$) is longer or shorter than the first optical path ($L_1$);

- e) implementing an iterative algorithm comprising the following sub-steps:

• ei) forming an initial image ($A_{P0}^0$), in the detection plane ($P_0$), from a starting image chosen from the first image ($I_{1,P0}$) and the second image ($I_{2,P0}$);

• eii) applying a holographic propagation operator ($h$) to the initial image ($A_{P0}^0$) or to a complex image ($A_{P0}^{n-1}$) formed in the detection plane and resulting from a previous iteration, so as to obtain a reconstructed complex image ($A_{Pr}^n$) in a reconstruction plane ($P_r$), the distance between the reconstruction plane and the detection plane corresponding to the variation in optical path ($\delta L$) obtained in step c), the complex image formed in the reconstruction plane having a modulus and phase defined in each pixel of said image;

• eiii) in the reconstruction plane ($P_r$), updating the modulus of the complex image ($A_{Pr}^n$) formed in the reconstruction plane, and resulting from eii), in each of the pixels thereof, depending on a destination image, the destination image being chosen from the first image or the second image, the destination image being different from the starting image chosen in step ei), the complex image ($A_{Pr}^n$), in the reconstruction plane, being updated by replacing, in each of the pixels thereof, the modulus of said image by the square root of the destination image;

• eiv) applying a holographic propagation operator to the updated complex image of eiii), to form a complex image in the detection plane ($A_{P0}^n{}'$), the complex image formed in the detection plane ($P_0$) having a modulus and phase defined in each pixel of said image;

• ev) updating the modulus of the complex image ($A_{P0}^n{}'$) formed in the detection plane in eiv), in each of the pixels thereof, depending on the starting image, the complex image ($A_{P0}^n$), in the detection plane, being updated by replacing, in each of the pixels thereof, the modulus of said image by the square root of the starting image;

• evi) reiterating steps eii) to ev) until a criterion for stopping the iterations is met;

- f) obtaining an image of the sample ($A_{10}$, $I_{10}$) from a complex image ($A_{P0}^N$, $A_{Pr}^N$) resulting from step e), said image being formed in the detection plane or in the reconstruction plane.

2. Method according to Claim 1, wherein the criterion for stopping the iterations is a pre-set number of iterations of steps eii) to ev).

3. Method according to anyone of claims 1 or 2, wherein step evi) of each iteration, after the first iteration, comprises computing a mean phase deviation, the mean phase deviation comprising:

- a mean deviation between the phases of each pixel of the complex image ($A_{Pr}^n$) formed, in the reconstruction plane, in step eii) of the iteration and in the previous iteration;

- or a mean deviation between the phases of each pixel of the complex image ($A_{P0}^n$) formed, in the detection plane, in step eiv) of the iteration and in the previous iteration;

the criterion for stopping the iterations being met when the mean deviation drops below a pre-set threshold or when a difference in mean deviation, between two successive iterations, drops below a pre-set threshold.

4. Method according to anyone of the preceding claims, wherein the distance between the image sensor and the sample is identical in steps b) and d).

5. Method according to anyone of the preceding claims, wherein no image-forming optics are placed between the image sensor and the sample.

6. Method according to anyone of claims 1 to 4, wherein:

- an optical system lies between the sample and the image sensor, the optical system defining an object plane ($P_o$) and an image plane ($P_i$);
- the sample lies in a sample plane ($P_{10}$), the sample plane being offset with respect to the object plane ($P_o$);
- and/or the detection plane ($P_0$) is offset with respect to the image plane ($P_i$).

7. Method according to anyone of the preceding claims, wherein, in step f), the image of the sample is obtained by applying a reconstruction operator (h):

- to the complex image formed in the detection plane ( $A_{P0}^n$ ) in the last iteration of steps eii) to ev);
- or to the complex image formed in the reconstruction plane ( $A_{Pr}^n$ ), in the last iteration of steps eii) to ev).

8. Device for observing a sample, comprising:

- a light source (11) configured to illuminate the sample;
- an image sensor (16) configured to acquire an image of the sample;
- a sample holder (10s) configured to hold the sample between the light source and the image sensor;

the device being configured to allow there to be placed, between the sample and the image sensor:

- either a first material, of a first refractive index ($n_1$), such that the image sensor is configured to acquire a first image ($I_{1,P0}$) of the sample when the first material is placed between the sample and the image sensor;
- or a second material, instead of the first material, of a second refractive index ($n_2$) different from the first refractive index, such that the image sensor is configured to acquire a second image ($I_{2,P0}$) of the sample, when the second material is placed between the sample and the image sensor;
- the device comprising a processing unit (20) that is programmed to implement steps e) and f) of a method according to any one of the preceding claims.

9. Device according to Claim 8, wherein the sample holder ($10_s$) is fixed with respect to the image sensor (16), such that the distance between the sample and the image sensor is identical during the acquisition of the first image and during the acquisition of the second image.

10. Device according to anyone of claims 8 to 9, wherein no image-forming optics are placed between the image sensor and the sample.

11. Device according to anyone of claims 8 to 10, wherein

- an optical system (19) lies between the sample and the image sensor, the optical system defining an object plane ($P_o$) and an image plane ($P_i$);
- the sample lies in a sample plane ($P_{10}$), the sample plane being offset with respect to the object plane ($P_o$);
- and/or the detection plane ($P_0$) is offset with respect to the image plane ($P_i$).

**Fig. 1A**

**Fig. 1B**

**Fig. 2A**

**Fig. 2B**

Fig. 3A

Fig. 3B

Fig. 3C

Fig. 3D

**Fig. 4**

# EP 4 020 093 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2019224474 A1

**Littérature non-brevet citée dans la description**

- **MCLEOD E.** ; **OZCAN A**. Unconventional methods of imaging : computational microscopy and compact implementation. *Rep. Prog. Phys.*, 2016, vol. 79, 076001